# FASCICULE DE BREVET EUROPEEN

(11) **EP 3 558 763 B1**
(45) Date de publication et mention de la délivrance du brevet: **16.12.2020**
(21) Numéro de dépôt: 17804210.7
(22) Date de dépôt: 29.11.2017
(51) Int. Cl.: B08B 7/00, B60S 1/56, G02B 27/00

(54) **DISPOSITIF DE NETTOYAGE DE LA SURFACE OPTIQUE D'UN CAPTEUR OPTIQUE POUR VÉHICULE AUTOMOBILE ET PROCÉDÉ ASSOCIÉ**
VORRICHTUNG ZUR REINIGUNG DER OPTISCHEN FLÄCHE EINES OPTISCHEN SENSORS FÜR EIN KRAFTFAHRZEUG UND ZUGEHÖRIGES VERFAHREN
DEVICE FOR CLEANING THE OPTICAL SURFACE OF AN OPTICAL SENSOR FOR A MOTOR VEHICLE AND ASSOCIATED METHOD

(30) Priorité: 21.12.2016 FR 1662969
(43) Date de publication de la demande: 30.10.2019
(73) Titulaire: Valeo Systèmes d'Essuyage, 78322 Le Mesnil Saint Denis (FR)
(72) Inventeur: BRETAGNOL, Frédéric, 63500 Issoire (FR); GRASSO, Giuseppe, 63500 Issoire (FR); TREBOUET, Marcel, 78322 Le Mesnil Saint Denis (FR)
(74) Mandataire: Valeo Vision
(86) Numéro de dépôt international: PCT/EP2017/080875
(87) Numéro de publication internationale: WO 2018/114262

(56) Documents cités:
- DE-A1-102014 200 097
- FR-A1- 3 027 008

## Description

Le domaine technique de l'invention est celui des dispositifs de nettoyage de capteurs optiques pour véhicule automobile, et plus particulièrement de nettoyage de la surface optique d'un tel capteur. Le document FR 3 027 008 A1 divulgue le préambule de la revendication 1.

Les capteurs optiques sont de plus en plus utilisés pour assister le conducteur d'un véhicule automobile dans sa conduite. Par exemple, un capteur optique peut être placé au niveau de l'arrière du véhicule afin de permettre au conducteur d'avoir une vision plus aisée des obstacles se situant derrière le véhicule lorsqu'il exécute un créneau. Les capteurs optiques sont ainsi généralement placés à l'extérieur du véhicule, exposés aux intempéries et à la poussière. Au cours du temps, il se forme une couche de saleté sur la surface optique du capteur, obstruant partiellement ou complètement le champ de détection du capteur. Il s'avère alors nécessaire de nettoyer régulièrement la surface optique du capteur pour lui permettre de remplir sa fonction.

Actuellement, les surfaces optiques des capteurs sont nettoyées à l'aide d'une solution aqueuse, projetée sous pression, afin de décoller la saleté du capteur. En fonction de la nature de la saleté, une quantité plus ou moins importante de solution aqueuse devra être utilisée pour un résultat incertain. En effet, certains types de saleté, comme par exemple la boue ou des résidus d'insectes, peuvent nécessiter une intervention du conducteur pour retirer manuellement les éléments les plus adhérents. D'autre part, compte tenu de la quantité de liquide consommée par ce type de dispositif, une quantité de solution aqueuse importante doit être stockée et transportée par le véhicule automobile. L'intégration d'un réservoir à cet effet est délicate dans les véhicules automobiles où le gain de place est un enjeu primordial. De plus, le stockage de la solution aqueuse alourdit le poids du véhicule, ce qui se traduit par une baisse sensible de l'autonomie du véhicule.

Il existe donc un besoin pour un dispositif de nettoyage de la surface optique d'un capteur optique pour véhicule automobile, plus simple d'utilisation, plus léger et plus facilement intégrable.

Pour cela, la présente invention propose un dispositif de nettoyage de la surface optique d'au moins un capteur optique pour véhicule automobile, qui se caractérise en ce qu'il comprend une source d'émission d'un faisceau laser et des moyens de guidage du faisceau laser sur au moins une partie de la surface optique du au moins un capteur, de manière à nettoyer la surface optique.

De façon avantageuse, la source d'émission d'un faisceau laser est moins encombrante et moins lourde qu'une réserve d'eau habituellement utilisée pour nettoyer la surface optique d'un capteur optique. De ce fait, l'invention permet une intégration plus aisée du dispositif de nettoyage dans un véhicule automobile tout en permettant de limiter son impact sur l'autonomie du véhicule.

La source d'émission du faisceau laser peut notamment être configurée en fonction de la nature de la saleté que l'on souhaite retirer de la surface optique. On peut ainsi adapter la longueur d'onde du faisceau laser en fonction des propriétés d'absorption de la couche de saleté afin de favoriser une absorption optimale du faisceau laser. Le faisceau laser peut notamment présenter une longueur d'onde comprise entre 200nm et 1 200nm, n'importe quelle valeur dans cette plage de longueurs d'onde permettant une action du faisceau laser sur la boue par exemple ou le sel. Par exemple, on peut privilégier l'obtention d'une longueur d'onde du faisceau laser entre 280nm et 380nm pour la prise en compte des protéines, et entre 450nm et 600nm pour la prise en compte de l'hémoglobine, dans le cas de retrait des insectes présents sur la surface optique.

Les moyens de guidage du faisceau laser peuvent notamment comprendre une fibre optique dont une première extrémité est couplée optiquement à la source d'émission du faisceau et dont une seconde extrémité est dirigée vers le ou les capteurs optiques. L'utilisation d'une fibre optique permet une plus grande liberté dans l'agencement de la source d'émission par rapport au capteur optique, facilitant ainsi son intégration dans différentes zones d'un véhicule automobile. D'autre part, l'utilisation d'une fibre optique permet également de confiner plus facilement le faisceau laser émis par la source d'émission.

Selon une caractéristique de l'invention, les moyens de guidage comprennent un dispositif de mise en forme du faisceau laser émis par la source d'émission, sur au moins une partie de la surface optique du capteur optique. Le dispositif de mise en forme vise à transmettre, réfléchir et/ou réfracter le faisceau laser de sorte à permettre d'éclairer au moins une partie de la surface optique du capteur. Afin de permettre la réalisation de l'invention à partir d'un grand nombre de capteurs optiques existants, le dispositif de mise en forme est de préférence agencé à l'extérieur du capteur optique. Néanmoins, il est envisageable d'intégrer le dispositif de mise en forme à l'intérieur du capteur optique, afin d'offrir un dispositif de nettoyage encore plus compact. Le dispositif de mise en forme peut comprendre au moins une lentille et/ou une surface concave réfléchissant le faisceau laser en direction de la surface optique du capteur optique.

Selon une autre caractéristique de l'invention, le dispositif de nettoyage comprend un embout d'émission du faisceau laser et des premiers moyens de déplacement de la position relative de l'embout d'émission par rapport à la surface optique du capteur optique. Par le terme embout d'émission, on entend ici l'extrémité des moyens de guidage par laquelle le faisceau laser est émis. Notamment, dans le cas d'une transmission du faisceau depuis la source d'émission par l'intermédiaire d'une fibre optique, l'embout d'émission est monté à la seconde extrémité de cette fibre.

Les premiers moyens de déplacement peuvent être configurés pour déplacer l'embout et/ou la surface optique, de façon réversible, entre une position passive dans laquelle l'embout n'est pas en regard de la surface optique, à une position active dans laquelle l'embout est en vis-à-vis de la surface optique à nettoyer. Selon un mode de réalisation de l'invention, les premiers moyens de déplacement sont configurés pour au moins pivoter la surface optique du capteur optique, tandis que l'embout reste immobile. Selon un autre mode de réalisation de l'invention, les premiers moyens de déplacement sont configurés pour modifier la position de l'embout d'émission, tandis que le capteur optique reste immobile. À titre d'exemple, les premiers moyens de déplacement peuvent désigner un bras télescopique et/ou articulé, apte à déplacer l'extrémité d'une fibre optique sur laquelle se situe l'embout.

Selon une autre caractéristique de l'invention, le dispositif de nettoyage comprend un faisceau laser configuré sous forme de ligne ou de point, c'est-à-dire ne couvrant pas la totalité de la surface optique à nettoyer, et des moyens de déviation des rayons de ce faisceau vers la surface optique, ainsi que des deuxièmes moyens de déplacement configurés pour modifier la position des moyens de déviation et réaliser de la sorte un balayage de la surface optique.

Par ailleurs, le dispositif de nettoyage peut comprendre des moyens de confinement du faisceau laser disposés entre l'embout et la surface optique, de sorte que le faisceau laser ne puisse se propager dans une autre direction que celle menant à la surface optique et risquer de causer dommage à un tiers. On peut notamment prévoir que, dans une position active de l'embout et/ou de la surface optique, les moyens de confinement sont configurés pour cacher à un tiers l'embout et la surface optique. Ainsi, lors du nettoyage de la surface optique par le faisceau laser, le faisceau laser est caché derrière les moyens de confinement afin d'éviter à un tiers ou un autre utilisateur de la route d'être gêné par ledit faisceau.

Selon une autre caractéristique de l'invention, le capteur optique comprend au moins une cellule de détection agencée de manière à détecter un rayonnement électromagnétique passant à travers la surface optique, et des moyens de préservation de la sensibilité d'au moins une cellule de détection vis-à-vis du faisceau laser émis par une source d'émission. De préférence, le ou les cellules de détection sont sensibles dans la région des longueurs d'onde visibles par l'œil humain et/ou dans la région de l'infrarouge.

Ces moyens de préservation de la sensibilité d'au moins une cellule de détection peuvent comporter au moins un filtre optique interposé entre la surface optique et au moins une cellule de détection. La plage de longueurs d'onde d'absorption du filtre optique recouvre de préférence la plage de longueurs d'onde du faisceau laser ciblé sur la surface optique. Selon une alternative, les moyens de préservation comprennent un obturateur optique interposé entre la surface optique et au moins une cellule de détection, configuré pour stopper la propagation du faisceau laser dans le capteur optique lors de l'opération de nettoyage. Selon une autre alternative, les moyens de préservation comprennent un moyen de pivotement d'au moins une cellule de détection dans le capteur optique, de sorte à détourner la ou les cellules de détection de la surface optique lorsque cette dernière est nettoyée par le faisceau laser.

Selon une autre caractéristique de l'invention, un module de commande est connecté à au moins une source d'émission d'un faisceau laser et aux premiers moyens de déplacement de la position relative de l'embout. Notamment, le module de commande peut être configuré pour piloter à la fois une source d'émission d'un faisceau laser et le déplacement relatif de l'embout par rapport à la surface optique du capteur optique.

Selon une autre caractéristique de l'invention, la source d'émission du faisceau laser est configurée pour émettre des faisceaux laser de longueurs d'onde différentes, notamment pour adapter la longueur d'onde du faisceau laser émis au type de salissures présents sur la surface optique à nettoyer. On peut prévoir dans ce contexte que le dispositif de nettoyage peut comprendre plusieurs sources d'émission de faisceau laser dont les longueurs d'onde sont différentes, chaque source d'émission comprenant des moyens de guidage de son faisceau laser sur au moins une partie de la surface optique du capteur optique. Il convient de noter que les faisceaux laser émis par les différentes sources d'émissions peuvent être guidés à travers une même fibre optique. Pour cela, les moyens de guidage peuvent comprendre un aiguilleur optique permettant de connecter optiquement à la fibre optique une et/ou une autre source d'émission.

Selon une autre caractéristique de l'invention, la source d'émission laser et les moyens de guidage sont configurés pour éclairer la surface optique avec un faisceau laser dont la fluence est égale ou inférieure à une valeur seuil. Cette valeur seuil correspond ici à l'énergie maximale à ne pas dépasser pour ne pas abimer la surface optique. Elle est prédéfinie et dépend du matériau recouvrant la surface optique. La valeur seuil est par exemple de 28 J.cm⁻². La puissance du faisceau laser peut bien entendu être choisie en fonction de la nature de la saleté que l'on souhaite retirer de la surface optique. La puissance du faisceau laser peut notamment être choisie de sorte à retirer la saleté par un phénomène d'ablation ou bien par choc plasma.

L'invention porte également sur un véhicule automobile comprenant un dispositif de nettoyage tel que décrit ci-dessus.

La présente invention concerne également un procédé de nettoyage de la surface optique d'un capteur optique à l'aide d'un dispositif de nettoyage tel que décrit ci-dessus, mettant en oeuvre une étape d'activation, par le module de commande, d'une source d'émission laser et des premiers moyens de déplacement de la position relative de l'embout de sorte à éclairer la surface optique avec un faisceau laser.

Pendant l'étape d'activation, le module de commande peut contrôler les premiers moyens de déplacement de sorte à déplacer le faisceau laser sur la surface optique.

Préalablement à l'étape d'activation, on peut réaliser l'acquisition par le capteur optique d'une première image de référence, puis l'acquisition par ce capteur optique d'une deuxième image de référence, et on peut réaliser le calcul de la différence de contraste entre la première et la deuxième image de référence, l'étape d'activation étant déclenchée lorsque cette différence dépasse une valeur seuil prédéterminée.

Pendant l'étape d'activation, le module de commande peut déplacer le faisceau laser uniquement sur la ou les zones de la surface optique, correspondant à une différence de contraste calculée entre la première et la deuxième image, qui dépasse une valeur seuil prédéterminée.

Le procédé de nettoyage peut comporter une étape de projection d'eau sur la surface optique, préalablement et/ou suite à l'étape d'activation décrite ci-dessus.

D'autres caractéristiques et avantages de la présente invention apparaitront plus clairement à l'aide de la description et des dessins parmi lesquels :

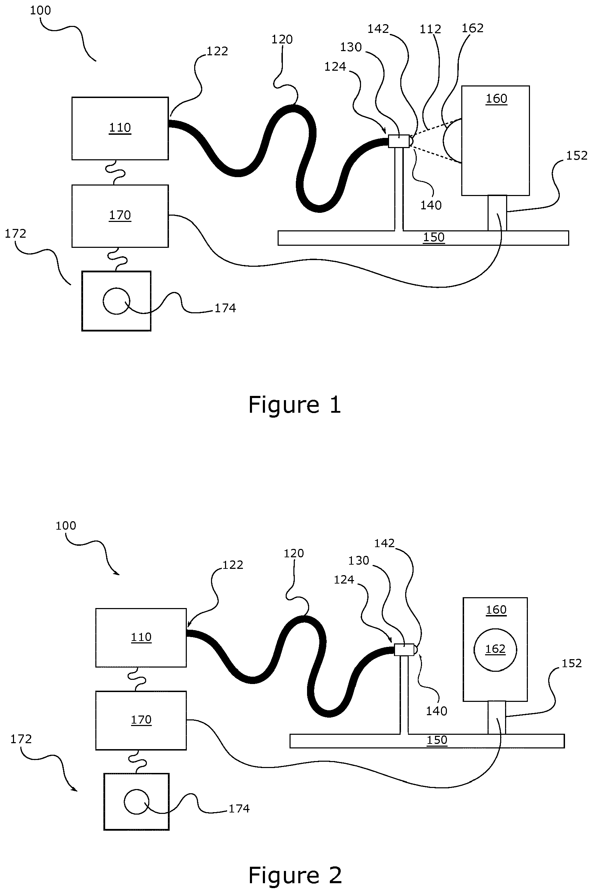

- la figure 1 est une représentation schématique d'un premier mode de réalisation d'un dispositif de nettoyage de la surface optique d'un capteur optique selon l'invention, en une position active ;
- la figure 2 est une représentation schématique du premier mode de réalisation d'un dispositif de nettoyage selon l'invention, en une position passive, obtenue par rotation du capteur optique et de la surface optique associée ;

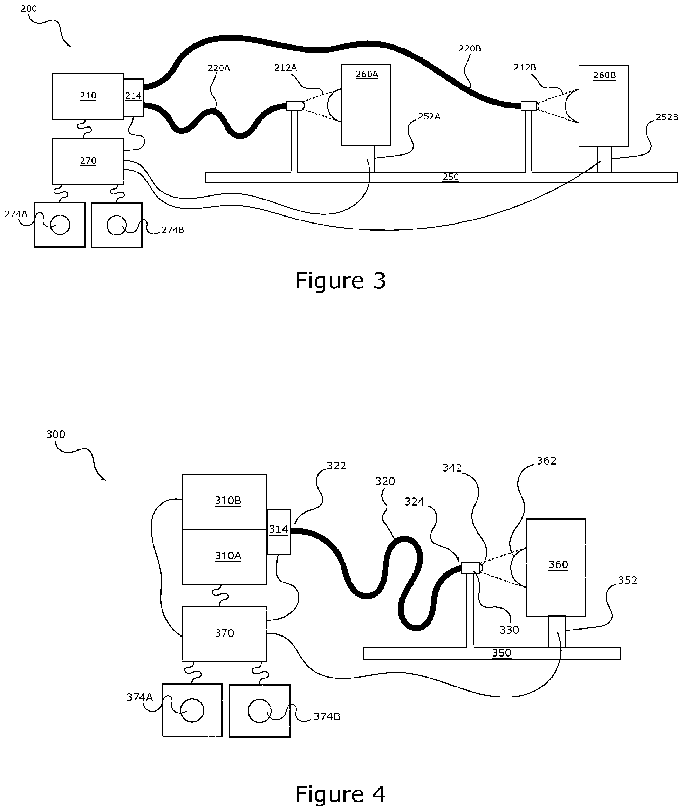

- la figure 3 est une représentation schématique d'un deuxième mode de réalisation d'un dispositif de nettoyage de la surface optique d'un capteur optique selon l'invention, qui diffère notamment du mode de réalisation de la figure 1 en ce qu'il comporte une pluralité de moyens de guidage du faisceau laser et une pluralité de surface optique à nettoyer ;
- la figure 4 est une représentation schématique d'un troisième mode de réalisation d'un dispositif de nettoyage de la surface optique d'un capteur optique selon l'invention, qui diffère notamment du mode de réalisation de la figure 1 en ce qu'il comporte deux sources d'émission laser différentes, afin de moduler la longueur d'onde du faisceau émis sur la surface optique ;

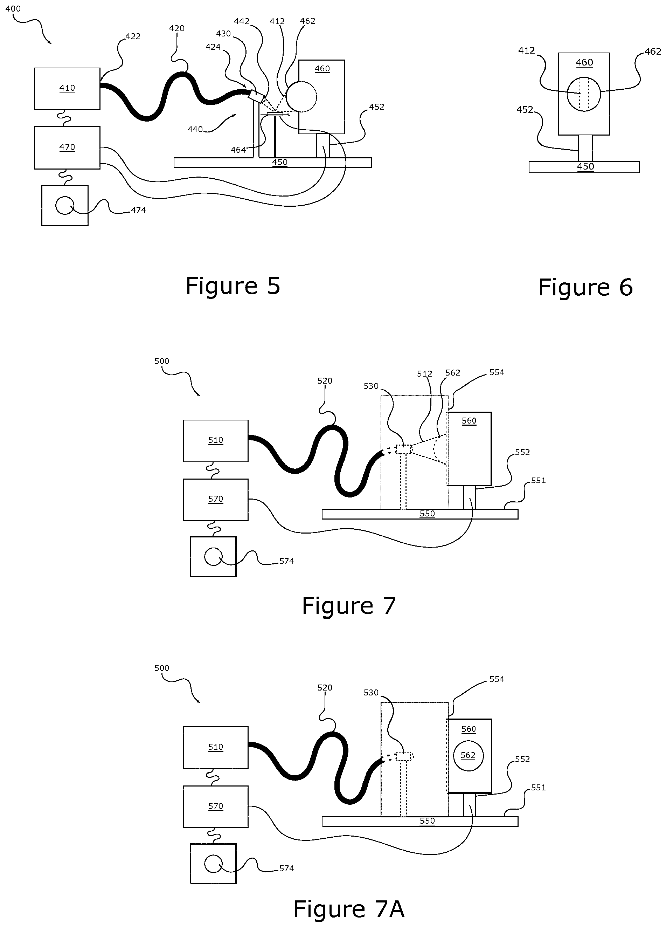

- les figures 5 et 6 sont des représentations schématiques d'un quatrième mode de réalisation d'un dispositif de nettoyage de la surface optique d'un capteur optique selon l'invention, dans lequel on a configuré de façon particulière la forme du faisceau laser projeté sur la surface à nettoyer ;
- la figure 7 est une représentation schématique d'un cinquième mode de réalisation d'un dispositif de nettoyage de la surface optique d'un capteur optique selon l'invention qui diffère du mode de la réalisation de la figure 1 en l'ajout de moyens de confinement visant à éviter la propagation des rayons laser ailleurs que sur la surface optique à nettoyer ;
- la figure 7A est une représentation schématique du dispositif de nettoyage illustré sur la figure 7, en position passive ;

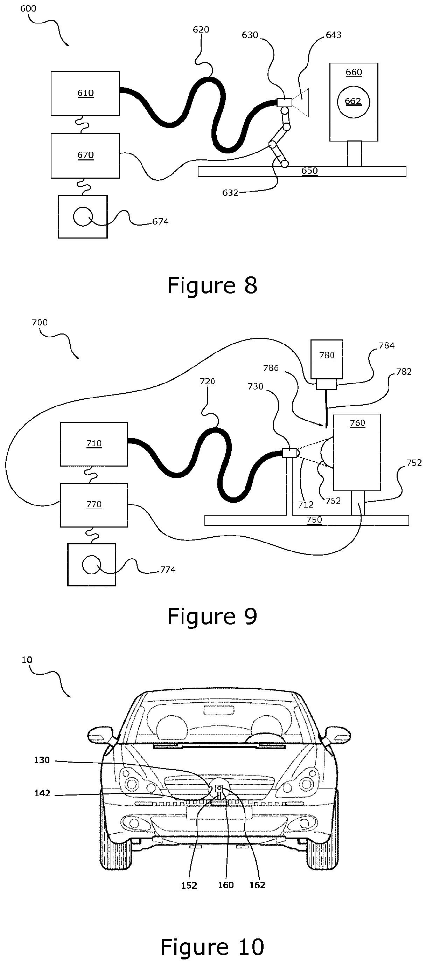

- la figure 8 est une représentation schématique d'un sixième mode de réalisation d'un dispositif de nettoyage de la surface optique d'un capteur optique selon l'invention, qui diffère du mode de réalisation de la figure 1 par la présence de moyens motorisés de déploiement de l'embout d'émission du faisceau laser en direction de la surface optique à nettoyer ;
- la figure 9 est une représentation schématique d'un septième mode de réalisation d'un dispositif de nettoyage de la surface optique d'un capteur optique selon l'invention, qui diffère de ce qui précède par l'ajout de moyens de projection d'une solution aqueuse sur la surface optique à nettoyer, utilisés en complément de l'émission du faisceau laser sur cette surface optique ; et
- la figure 10 est une représentation schématique d'une face avant de véhicule automobile, dans laquelle on a rendu visible un capteur optique et sa surface optique à nettoyer par un dispositif de nettoyage selon l'invention.

L'invention vise à proposer un dispositif de nettoyage de la surface optique d'un capteur optique pour véhicule automobile, plus simple d'utilisation, plus léger et plus facilement intégrable dans un véhicule automobile.

Le dispositif de nettoyage de la surface optique va être décrit en référence à une pluralité d'exemples de réalisation, en référence aux figures 1 à 9, et il est à noter que les références comportant des chiffres identiques pour les unités et les dizaines désignent des éléments communs aux différents exemples de réalisation de l'invention décrits ci-après.

La figure 1 présente un premier exemple de réalisation d'un dispositif de nettoyage 100 selon l'invention. Selon cet exemple, le dispositif de nettoyage comprend une source d'émission 110 d'un faisceau laser 112, de type laser à Ytterbium, et dont la longueur d'onde est ici comprise entre 200nm et 1200nm. La longueur d'onde du faisceau laser émis peut être définie de manière définitive lors de la conception et lors de la mise en oeuvre du dispositif de nettoyage sur le véhicule, et l'on pourra prévoir une source d'émission configurable en cours d'utilisation pour modifier au besoin les longueurs d'onde des rayons émis. Selon le présent exemple, la source d'émission 110 est une source laser émettant un faisceau dont la longueur d'onde est de 1 060nm, à une fréquence de 20KHz. La source d'émission 110 est couplée optiquement avec une fibre optique 120 de manière à permettre au faisceau laser 112 de se propager dans la fibre optique depuis une première extrémité 122 de la fibre optique, accolée à la source d'émission 110, vers une seconde extrémité 124. La seconde extrémité de la fibre optique se termine par un embout 130, maintenant un dispositif de mise en forme 140 du faisceau laser émis au niveau de la seconde extrémité 124 de la fibre optique. Selon le présent exemple, le dispositif de mise en forme comporte au moins une lentille optique 142, configurée pour faire diverger le faisceau laser de manière à accroitre son angle solide.

On pourra prévoir à titre d'exemple non limitatif que le dispositif de mise en forme comporte un collimateur et au moins une lentille agencés pour ajuster, c'est-à-dire redresser et concentrer, la forme du faisceau laser émis en un spot de la taille de la surface optique à nettoyer 162.

La source d'émission 110 peut être agencée à distance de la zone d'implantation du capteur optique, notamment grâce à la présence de la fibre optique 120 amenant les rayons émis par la source d'émission vers l'embout 130, lui disposé à proximité du capteur optique. De la sorte, la source d'émission peut être disposé dans une zone protégée, et par exemple dans le coffre du véhicule, alors que le capteur optique est disposé, tel qu'illustré à titre d'exemple sur la figure 10, en face avant du véhicule.

L'embout 130 est maintenu sur un support 150 de sorte que le faisceau laser 112 éclaire un capteur optique 160 également monté sur le support 150. On pourrait prévoir en variante de maintenir séparément l'embout 130 et le capteur optique 160 sur des supports distincts, mais il est avantageux de prévoir un support commun tel qu'illustré afin de faciliter la précision du positionnement relatif l'un par rapport à l'autre du capteur optique et de l'embout d'émission du faisceau laser. Plus précisément, le capteur optique 160 est maintenu sur le support par l'intermédiaire d'une liaison pivot motorisée 152 permettant de pivoter le capteur optique entre une position active représentée à la figure 1 et une position passive illustrée à la figure 2. En position active, le capteur optique 160 est orienté pour que sa surface optique 162 soit tournée vers l'embout 130 par lequel le faisceau laser est émis, afin que l'intégralité de sa surface optique 162 puisse être éclairée par le faisceau laser 112. À l'inverse, en position passive, la surface optique 162 est écartée du faisceau laser pour être orientée vers une scène à observer, comme par exemple la route à emprunter par le véhicule automobile. On comprend dès lors que le capteur optique est disposé principalement dans la position passive, qui est donc plus particulièrement une position passive par rapport au nettoyage, pour pouvoir principalement surveiller la scène de route à proximité du véhicule.

La liaison pivot motorisée 152 est commandée par un module de commande 170. Le module de commande 170 est également connecté à la source d'émission 110 et à un organe d'activation 172. Lorsque l'organe d'activation 172 est activé, le module de commande génère une instruction de commande en direction des actionneurs de la liaison pivot motorisée 152, afin de faire pivoter le capteur optique 160 de sa position passive à sa position active, et il génère simultanément une instruction d'activation de la source d'émission 110, le cas échéant soumise à l'achèvement du pivotement du capteur optique. À l'inverse, lorsque l'organe d'activation 172 est désactivé, le boitier de commande génère des instructions pour désactiver la source d'émission et pour pivoter le capteur optique 160 de sa position active à sa position passive, là encore par l'intermédiaire de la liaison pivot motorisée 152. À titre d'exemple, l'organe d'activation peut être un bouton poussoir 174, actionné par un utilisateur souhaitant nettoyer la surface optique 162 du capteur optique à l'aide du faisceau laser 112.

Tel qu'ils seront décrits ci-après, des moyens de confinement peuvent être mis en œuvre dès lors que le faisceau laser utilisé pour l'opération de nettoyage présente une puissance potentiellement nocive pour un tiers. La liaison pivot motorisée 152 est ici prévue pour amener la surface optique à nettoyer en regard de l'embout 130, dans une zone protégée par les moyens de confinement. Selon la configuration de ces moyens de confinement, on pourra prévoir que le capteur optique est rendu mobile de la position passive à la position active par des moyens complémentaires à ceux formés par la liaison pivot motorisée.

La source de lumière peut consister en une source d'émission par impulsion ou une source d'émission continue, et l'action sur les saletés présentes sur la surface optique peut consister en un phénomène physique d'ablation laser ou de choc plasma.

A titre d'exemple non limitatif, on pourra prévoir que la source d'émission laser répond aux caractéristiques suivantes :

| | |
|---|---|
| Densité [kW/cm²] | 530 |
| Energie [mJ] | 0.935 |
| Puissance crête [W] | 9350 |
| Puissance moyenne [W] | 18.7 |
| Fluence [J/cm²] | 2.65 |
| Fréquence [kHz] | 20 |
| Durée de pulse [ns] | 100 |

Un deuxième exemple de réalisation de l'invention est décrit à la figure 3. Selon ce deuxième exemple, le dispositif de nettoyage 200 se distingue notamment de l'exemple précédent en ce qu'il comprend une deuxième fibre optique 220B, couplée à la source d'émission 210, en complément d'une première fibre optique 220A et en ce que chaque fibre optique est associée à l'émission d'un faisceau laser 212A, 212B sur une surface optique d'un capteur optique 260A, 260B qui lui est spécifiquement associé.

Plus précisément, les fibres optiques 220A et 220B sont couplées à la même source d'émission 210 par l'intermédiaire d'un aiguilleur optique 214 permettant au faisceau laser, émis par la source d'émission 210, de se propager dans une fibre optique ou bien dans les deux fibres optiques simultanément. Il est à noter que la première fibre optique 220A et la deuxième fibre optique 220B sont identiques à la fibre optique 120 décrite ci-dessus. Chaque fibre optique comprend également, au niveau de son extrémité libre, un embout maintenant une lentille. Les embouts sont maintenus sur un support 250 de manière à ce que chaque embout puisse éclairer l'intégralité de la surface optique du capteur optique qui lui est associé, lorsque ce capteur optique est en position active. De même que précédemment, chaque capteur optique 260A et 260B est respectivement maintenu sur le support 250 par l'intermédiaire d'une liaison pivot motorisée 252A et 252B, permettant à chaque capteur optique 260A et 260B de passer d'une position active à une position passive ou inversement. Les liaisons pivots motorisées sont commandées par un module de commande 270. Le module de commande 270 est également connecté à la source d'émission 210 et à l'aiguilleur optique 214. Le module de commande est aussi connecté à deux boutons poussoirs distincts 274A et 274B. L'activation de chaque bouton poussoir permet à un utilisateur de faire procéder au nettoyage de la surface optique d'un capteur optique à l'aide d'un faisceau laser 212A, 212B, tel que décrit ci-dessus. Ainsi, de façon avantageuse, une même source d'émission 210 d'un faisceau laser peut être utilisée pour nettoyer la surface optique de plusieurs capteurs optiques, de façon simultanée ou bien l'un après l'autre. L'invention permet un gain de place et de poids significatif dans un véhicule comportant plusieurs capteurs optiques.

La figure 4 illustre un autre mode de réalisation d'un dispositif de nettoyage 300 selon l'invention. Ce troisième mode de réalisation se distingue du premier en ce qu'il comporte deux sources d'émission distinctes. Plus précisément, la première extrémité 322 de la fibre optique 320 est couplée à la sortie d'un aiguilleur optique 314, qui est par ailleurs couplé en entrée à deux sources d'émission 310A et 310B. Chaque source d'émission est configurée pour émettre un faisceau laser dans une plage de longueurs d'onde différente. À titre d'exemple, la première source d'émission 310A est paramétrée pour émettre un premier faisceau laser à 1200nm, tandis que la deuxième source d'émission 310B est paramétrée pour émettre un deuxième faisceau laser à 200nm. On pourra notamment prévoir que la première source d'émission est paramétrée pour émettre selon une longueur d'ondes supérieure à 500nm, de manière à générer en particulier une action thermique via l'émission de rayons infrarouges, et que la deuxième source d'émission est paramétrée pour émettre selon une longueur d'ondes inférieure à 500nm, de manière à générer une action notamment chimique via l'émission de rayons ultraviolets. De même, il est possible de mettre en œuvre une source à émission pulsée et une source à émission continue, de sorte à faire varier la puissance d'émission en fonction de la saleté détectée sur la surface optique.

Le dispositif de nettoyage 300 comprend également un module de commande 370 connecté à l'aiguilleur optique 314, aux sources d'émission 310A et 310B, à une liaison pivot motorisée 352 telle que décrite ci-dessus et à deux boutons poussoirs distincts 374A et 374B. Le module de commande 370 est configuré pour actionner l'une ou l'autre des sources d'émission en fonction de l'activation de l'un ou l'autre des boutons poussoirs, et pour orienter l'aiguilleur optique 314 de sorte à coupler le faisceau laser émis par la source d'émission activée dans la fibre optique 320. Le module de commande 370 est également configuré pour commander à la liaison pivot motorisée 352 de pivoter le capteur optique 360 d'une position passive à une position active, lorsque l'un des boutons poussoirs est actionné, afin que le faisceau émis au niveau de l'embout d'émission 330 soit dirigé vers la surface optique du capteur optique. Selon le présent exemple, le bouton-poussoir 374A commande l'activation de la source d'émission 310A. Au bout d'un temps déterminé, estimé nécessaire au nettoyage de la surface optique, les sources d'émission sont désactivées et le capteur optique est ramené en position passive de nettoyage, c'est-à-dire en position pour réaliser des opérations de détection de l'environnement du véhicule, avec une surface optique nettoyée. Bien entendu, lorsqu'aucun bouton poussoir n'est activé, le module de commande laisse inactive les sources d'émission 310A et 310B, et le capteur optique 360 est laissé dans sa position passive. Ce troisième mode de réalisation permet avantageusement à un utilisateur de nettoyer la surface optique 362 du capteur optique avec deux faisceaux laser de longueurs d'onde différentes. Ainsi, l'invention permet à un utilisateur d'effectuer un nettoyage plus adapté en fonction de la nature de la couche de saleté recouvrant la surface optique du capteur. Selon le présent exemple, la première source d'émission 310A est configurée pour émettre un faisceau laser dans une plage de longueur d'onde correspondant à la plage de longueur d'onde d'absorption de 500nm à 1200nm, alors que le faisceau laser émis par la deuxième source d'émission 310B correspond à la plage de longueur d'absorption de 250nm à 500nm, 250nm étant une valeur de longueur d'onde dans l'ultraviolet qui permet une action chimique sur les pollutions. Ainsi, en fonction de la nature de la couche de saleté recouvrant la surface optique 362, l'utilisateur peut sélectionner l'une ou l'autre source d'émission, ou bien combiner les deux, afin de s'assurer une meilleure absorption du faisceau laser par la couche de saleté pour permettre un nettoyage plus rapide et plus efficace de la surface optique.

La figure 5 illustre un autre mode de réalisation d'un dispositif de nettoyage 400 selon l'invention. Ce quatrième mode de réalisation se distingue du premier en ce que l'embout 430, disposé à la seconde extrémité 424 de la fibre optique 420, maintient une lentille optique 442 configurée pour faire converger sur la surface optique 462 un faisceau laser 412 de la forme d'un parallélogramme Le dispositif de mise en forme 442 comporte dans l'exemple illustré un miroir mobile 464 par l'intermédiaire duquel le faisceau laser 412 est projeté sur la surface optique et dont le déplacement en rotation génère un balayage de la surface optique. Comme représenté à la figure 6, pour une position déterminée du miroir mobile, la forme parallélépipédique du faisceau laser 412 s'étend sur toute la hauteur de la surface optique 462 du capteur optique 460 mais s'étend seulement partiellement sur sa largeur. Le faisceau laser 412 délimite ainsi une forme dont la projection dans un plan perpendiculaire à la direction générale du faisceau laser est rectangulaire. A titre d'exemple, on peut envisager que les dimensions de cette projection rectangulaire sur la surface optique 462 sont de 15mm par 100µm. En d'autres termes, le faisceau laser 412 éclaire à présent une partie seulement de la surface optique du capteur optique. Le miroir mobile 464 permet de balayer dans un sens puis dans l'autre, en fonction du sens de rotation du miroir mobile, l'intégralité de la surface optique 462 avec ce faisceau laser rectangulaire. On comprend que l'on pourrait alternativement proposer un faisceau laser sous forme de point et un dispositif de mise en forme qui comporte un ou plusieurs miroirs mobiles offrant deux degrés de liberté dans leur déplacement. Afin de réaliser ce balayage de la surface optique, le module de commande 470 est également connecté aux moyens de pivotement formés par le ou les miroir(s) mobile(s) 464. Lorsque le bouton-poussoir 474 est activé par un utilisateur, le module de commande 470 est configuré pour pivoter la liaison pivot motorisée 452 de manière à déplacer le capteur optique 460 d'une position passive à une position active, puis activer la source d'émission 410 et commander le pivotement du miroir mobile 464 de sorte que le faisceau laser balaie l'intégralité de la surface optique 462. Comme précédemment, lorsque l'organe d'activation 472 est désactivé, ou après un laps de temps de nettoyage déterminé, le module de commande est configuré pour désactiver la source d'émission et pivoter le capteur optique 460 de sa position active à sa position passive. Ce quatrième mode de réalisation permet avantageusement de focaliser le faisceau laser sur une plus petite surface pour augmenter sa puissance et permettre un nettoyage de la surface optique plus efficace.

La figure 7 illustre, dans un cinquième mode de réalisation d'un dispositif de nettoyage 500 selon l'invention, plus en détails les moyens de confinement 554 du faisceau laser 512 émis par la source d'émission 510, étant entendus que de tels moyens de confinement pourraient être mis en place sur chacun des modes de réalisation précédemment décrits. Plus précisément, les moyens de confinement 554 sont agencés au niveau de l'embout 530 et sont configurés pour confiner le faisceau laser au niveau du support 550 lorsque le capteur optique 560 est en position active. Sur la figure 7, on a rendu visible une paroi 554 de ces moyens de confinement, paroi 554 solidaire du support et s'étendant dans une direction sensiblement perpendiculaire à la base 551 du support sur laquelle est maintenu l'embout 530 et le capteur optique 560. En particulier, cette paroi 554 s'étend sur toute la hauteur du capteur optique et elle présente une longueur plus importante que la distance entre l'embout et la surface optique, de sorte à masquer à un tiers l'embout 530 et la surface optique 562 du capteur optique lorsque le faisceau laser nettoie la surface optique, les composants masqués par la paroi étant représentés en pointillés pour faciliter la lecture des figures. La paroi 554 est agencée de sorte que l'embout est systématiquement masqué et de sorte que, lorsque le capteur optique 560 est dans une position passive de nettoyage (visible sur la figure 7A), l'extrémité de la paroi 554 n'apparaît pas dans le champ de détection du capteur optique. On comprend que les moyens de confinement prennent avantageusement la forme d'une boîte noire pour bloquer dans toutes les directions les rayons laser pouvant causer dommage aux tiers, et que seule une paroi a été illustrée pour faciliter la représentation schématique. On pourra notamment prévoir une partie de paroi souple permettant le pivotement du capteur optique de la position passive, dans laquelle la surface optique est hors de ces moyens de confinement, vers la position active, dans laquelle la surface optique est à l'intérieur de ces moyens de confinement.

La figure 8 illustre un autre mode de réalisation d'un dispositif de nettoyage 600 selon l'invention. Ce sixième mode de réalisation se distingue du premier mode en ce que le capteur optique 660 est maintenu de façon fixe sur le support 650 et en ce que l'embout 630 est maintenu à l'extrémité d'un bras déployable motorisé 632 commandé par le module de commande 670. La modification de la position relative de l'embout par rapport à la surface optique est donc assurée par un déplacement de l'embout, contrairement à ce qui précède où elle était mise en œuvre par déplacement de la surface optique. On peut notamment prévoir un déploiement télescopique de l'embout 630, avec un bras télescopique motorisé qui est configuré pour déplacer l'embout 630, à une vitesse de 5mm/s, entre une position passive située à côté de la surface optique 662 (visible sur la figure 8) à une position active située devant la surface optique. Plus précisément, le bras motorisé 632 est configuré pour déplacer l'embout 630 devant la surface optique 662 de sorte que le faisceau laser balaie l'intégralité de la surface optique 662 afin de nettoyer l'intégralité de ladite surface. Lorsque l'organe d'activation 674 est activé, le module de commande 670 est configuré pour commander au bras déployable motorisé 632 de déplacer l'embout 630 de sa position passive à sa position active, puis activer la source d'émission 610. Et suite à un laps de temps déterminé, ou bien lorsque l'organe d'activation 674 est désactivé, le boitier de commande est configuré pour désactiver la source d'émission 610 et rétracter le bras motorisé 632 de sa position active à sa position passive de manière à ce que l'embout 630 ne soit pas visible par le capteur optique 660.

Un dispositif de confinement spécifique à ce mode de réalisation, dans lequel c'est l'embout de la source d'émission qui se déplace, peut être mis en œuvre tel qu'illustré sur la figure 8. Une membrane 643 en forme de cône est disposée autour de l'embout 630 et de la lentille optique associée pour venir se plaquer contre le capteur optique 660 en entourant la surface optique 662 à nettoyer. Lorsque la source d'émission est activée, les rayons sortant de l'embout sont confinés jusqu'à entrer en contact avec la surface optique.

La figure 9 illustre un autre mode de réalisation d'un dispositif de nettoyage 700 selon l'invention. Ce septième mode de réalisation comporte en plus du premier mode de réalisation décrit ci-dessus un réservoir 780 contenant une solution aqueuse. Le réservoir 780 est raccordé à un canal de distribution 782 par l'intermédiaire d'une vanne motorisée 784 et l'extrémité libre 786 du canal est agencée au voisinage de la surface optique 762 lorsque le capteur optique est en position active. Le module de commande 770 est également connecté à la vanne motorisée 784. Le module de commande 770 est configuré pour commander à la vanne motorisée l'application d'une ou plusieurs gouttes d'eau sur la surface optique 762 préalablement ou ultérieurement à l'activation de la source d'émission 710. Ce mode de réalisation permet notamment, lorsque de l'eau est pulvérisé sur la surface optique avant la projection d'un faisceau laser, de créer un phénomène de cavitation au niveau de la ou des gouttes d'eau présentes sur la surface optique, favorisant un nettoyage plus efficace de la surface optique 762.

La description qui précède explique clairement comment l'invention, selon l'un ou l'autre des exemples de réalisation, permet d'atteindre les objectifs qu'elle s'est fixés et notamment de proposer un dispositif de nettoyage d'une surface optique par l'émission et la projection d'un faisceau laser sur cette surface optique, qui permet un nettoyage optimal sans qu'il soit nécessaire de prévoir un dimensionnement pénalisant des moyens de nettoyage associés.

L'invention ne se limite toutefois pas aux exemples de réalisation précédemment décrits, et on pourra prévoir d'une part de combiner entre eux les exemples de réalisation décrits ci-dessus afin de former de nouveaux exemples non explicitement décrits, et d'autre part des variantes dont quelques exemples non exhaustifs sont donnés ci-dessous.

L'un des modules de commande décrit ci-dessus peut intégrer un calculateur et une unité de mémorisation afin de permettre à un algorithme, préalablement enregistré sur l'unité de mémorisation, d'effectuer le nettoyage de la surface optique du capteur de façon régulière, sans intervention d'un utilisateur. À titre d'exemple, l'algorithme peut commander le nettoyage du capteur optique une fois par semaine ou bien une fois par mois.

Selon une autre alternative, le module de commande décrit ci-dessus peut être connecté au capteur optique de manière à pouvoir acquérir en temps réel des images prises par ledit capteur et de manière à piloter en conséquence l'activation des moyens d'émission et le mouvement relatif de l'embout par rapport à la surface optique, notamment en fonction de la détection de salissures sur la surface optique. De la sorte, on réalise des séquences de nettoyage lorsqu'elles sont nécessaires, sans intervention manuelle du conducteur. L'algorithme mentionné ci-dessus peut alors être configuré pour permettre au module de commande de mettre en œuvre les étapes suivantes :
- acquisition par le capteur optique d'une première image de référence ;
- acquisition par le capteur optique d'une deuxième image de référence, après une période de temps donnée ;
- calcul par le module de commande de la différence de contraste entre la première et la deuxième image de référence ;
- et, lorsque cette différence dépasse une valeur seuil prédéterminée, activation du dispositif de nettoyage tel que décrit ci-dessus de sorte à nettoyer la surface optique du capteur optique par un phénomène physique d'ablation laser ou de choc plasma.

Selon une variante, le module de commande peut orienter le capteur optique vers une mire lors de l'acquisition des images de référence, afin de permettre un calcul plus précis de la différence de contraste dans le temps, des images acquises par le capteur optique.

Selon une autre variante, le module de commande est configuré pour appliquer le faisceau laser sur la surface optique du capteur optique uniquement sur la ou les zones de la surface optique correspondant à une différence de contraste calculée entre la première et la deuxième image de référence, dépassant une valeur seuil prédéterminée. Selon cette variante, le dispositif de nettoyage est configuré pour projeter le faisceau laser sur une partie de la face optique du capteur, tel que cela est notamment décrit dans le quatrième mode de réalisation décrits ci-dessus. Il est à noter que le faisceau laser peut également être projeté sous une forme différente, comme par un exemple sous la forme d'un spot, afin de permettre un nettoyage plus précis de la surface optique.

Selon une autre variante, on pourra prévoir que la surface optique à nettoyer est recouverte d'un revêtement, notamment dans le cas d'utilisation de rayons infrarouges. Ce revêtement évite que ces rayons viennent brûler la surface optique. De la sorte, les rayons venant au contact de la lentille agissent sur toutes les saletés rencontrées avant d'impacter le revêtement de la surface optique, et sont absorbés lorsqu'ils rencontrent le revêtement approprié. On pourra choisir la longueur d'émission des ondes du laser en fonction du type de matériau utilisé comme revêtement.

## Revendications

1. Dispositif de nettoyage (100, 200, 300, 400, 500, 600, 700) de la surface optique (162, 362, 462, 562, 662, 762) d'au moins un capteur optique (160, 260, 360, 460, 560, 660, 760) pour véhicule automobile, **caractérisé en ce qu'**il comprend une source d'émission (110, 210, 310A, 310B, 410, 510, 610, 710) d'un faisceau laser et des moyens de guidage de ce faisceau laser sur au moins une partie de la surface optique (162, 362, 462, 562, 662, 762), de manière à nettoyer la surface optique.

2. Dispositif de nettoyage selon la revendication précédente, **caractérisé en ce que** les moyens de guidage comprennent un dispositif de mise en forme (142, 342, 442) du faisceau laser émis par la source d'émission (110, 210, 310A, 310B, 410, 510, 610, 710) pour leur projection sur au moins une partie de la surface optique du au moins un capteur optique (160, 260, 360, 460, 560, 660, 760).

3. Dispositif de nettoyage selon la revendication 1 ou 2, **caractérisé en ce qu'**il comprend un embout (130, 330, 430, 530, 630, 730) d'émission du faisceau laser et des premiers moyens de déplacement (152, 252, 352, 452, 464, 552, 632, 752) de la position relative de l'embout d'émission par rapport à la surface optique du au moins un capteur optique.

4. Dispositif de nettoyage selon la revendication précédente, **caractérisé en ce que** les premiers moyens de déplacement sont configurés pour déplacer l'embout et/ou la surface optique, de façon réversible, entre une position passive, dans laquelle l'embout (130, 330, 430, 530, 630, 730) n'est pas en regard de la surface optique (162, 362, 462, 562, 662, 762), à une position active dans laquelle l'embout est en vis-à-vis de la surface optique à nettoyer.

5. Dispositif de nettoyage (500) selon la revendication 3 ou 4, **caractérisé en ce qu'**il comprend des moyens de confinement (554) du faisceau laser disposés entre l'embout (530) et la surface optique.

6. Dispositif de nettoyage selon l'une des revendications précédentes, **caractérisé en ce que** l'au moins un capteur optique comprend au moins une cellule de détection agencée de manière à détecter un rayonnement électromagnétique passant à travers la surface optique, et des moyens de préservation de la sensibilité d'au moins une cellule de détection vis-à-vis du faisceau laser émis par la source d'émission (110, 210, 310A, 310B, 410, 510, 610, 710).

7. Dispositif de nettoyage selon l'une des revendications 3 à 6, **caractérisé en ce qu'**il comprend un module de commande (170, 270, 370, 470, 570, 670, 770) connecté à au moins une source d'émission (110, 210, 310A, 310B, 410, 510, 610, 710) d'un faisceau laser et aux premiers moyens de déplacement (152, 252A, 252B, 352, 452, 464, 552, 632, 752) de la position relative de l'embout.

8. Dispositif de nettoyage selon la revendication précédente, **caractérisé en ce que** le module de commande (170, 270, 370, 470, 570, 670, 770) est configuré pour piloter à la fois une source d'émission (110, 210, 310A, 310B, 410, 510, 610, 710) d'un faisceau laser et le déplacement relatif de l'embout (130, 330, 430, 530, 630, 730) par rapport à la surface optique (162, 362, 462, 562, 662, 762) du au moins un capteur optique.

9. Dispositif de nettoyage selon l'une des revendications précédentes, **caractérisé en ce que** la source d'émission (110, 210, 310A, 310B, 410, 510, 610, 710) du faisceau laser est configurée pour émettre des faisceaux laser de longueurs d'onde différentes.

10. Dispositif de nettoyage (300) selon l'une des revendications précédentes, **caractérisé en ce qu'**il comprend plusieurs sources d'émission (310A, 310B) de faisceau laser dont les longueurs d'onde sont différentes, chaque source d'émission comprenant des moyens de guidage de son faisceau laser sur au moins une partie de la surface optique du au moins un capteur optique.

11. Dispositif de nettoyage selon la revendication précédente, **caractérisé en ce que** la source d'émission (110, 210, 310A, 310B, 410, 510, 610, 710) du faisceau laser et les moyens de guidage sont configurés pour éclairer la surface optique avec un faisceau laser dont la fluence est égale ou inférieure à une valeur seuil,.

12. Procédé de nettoyage de la surface optique d'un capteur optique d'un rayonnement électromagnétique à l'aide d'un dispositif de nettoyage (100, 200, 300, 400, 500, 600, 700) selon l'une des revendications 3 ou 4 à 11 dépendante de la revendication 3, mettant en œuvre au moins une étape d'activation de la source d'émission (110, 210, 310A, 310B, 410, 510, 610, 710) d'un faisceau laser et les premiers moyens de déplacement (152, 252, 352, 452, 464, 552, 632, 752) de la position relative de l'embout, de manière à éclairer la surface optique avec un faisceau laser.

13. Procédé de nettoyage selon la revendication 12, **caractérisé en ce que** pendant l'étape d'activation, on contrôle les premiers moyens de déplacement (152, 252, 352, 452, 464, 552, 632, 752) de sorte à déplacer le faisceau laser sur la surface optique.

14. Procédé de nettoyage selon la revendication 12 ou 13, **caractérisé en ce que** préalablement à l'étape d'activation, on réalise l'acquisition par l'au moins un capteur optique d'une première image de référence, puis l'acquisition par cet au moins un capteur optique d'une deuxième image de référence, et l'on réalise le calcul de la différence de contraste entre la première et la deuxième image de référence, l'étape d'activation étant déclenchée lorsque cette différence dépasse une valeur seuil prédéterminée.

15. Procédé de nettoyage selon la revendication 14, **caractérisé en ce que** pendant l'étape d'activation, on déplace le faisceau laser uniquement sur la ou les zones de la surface optique, correspondant à une différence de contraste calculée entre la première et la deuxième image qui dépasse une valeur seuil prédéterminée.

## Patentansprüche

1. Vorrichtung zur Reinigung (100, 200, 300, 400, 500, 600, 700) der optischen Fläche (162, 362, 462, 562, 662, 762) mindestens eines optischen Sensors (160, 260, 360, 460, 560, 660, 760) für ein Kraftfahrzeug, **dadurch gekennzeichnet, dass** sie eine Emissionsquelle (110, 210, 310A, 310B, 410, 510, 610, 710) eines Laserstrahls und Mittel zum Führen dieses Laserstrahls auf mindestens einen Teil der optischen Fläche (162, 362, 462, 562, 662, 762) beinhaltet, um die optische Fläche zu reinigen.

2. Reinigungsvorrichtung nach dem vorhergehenden Anspruch, **dadurch gekennzeichnet, dass** die Führungsmittel eine Vorrichtung zur Formung (142, 342, 442) des durch die Emissionsquelle (110, 210, 310A, 310B, 410, 510, 610, 710) emittierten Laserstrahls beinhalten, um diesen auf mindestens einen Teil der optischen Fläche des mindestens einen optischen Sensors (160, 260, 360, 460, 560, 660, 760) zu projizieren.

3. Reinigungsvorrichtung nach Anspruch 1 oder 2, **dadurch gekennzeichnet, dass** sie ein Endstück (130, 330, 430, 530, 630, 730) zur Emission des Laserstrahls und erste Mittel zum Verschieben (152, 252, 352, 452, 464, 552, 632, 752) der relativen Position des Emissionsendstücks mit Bezug auf die optische Fläche des mindestens einen optischen Sensors beinhaltet.

4. Reinigungsvorrichtung nach dem vorhergehenden Anspruch, **dadurch gekennzeichnet, dass** die ersten Verschiebemittel dazu konfiguriert sind, das Endstück und/oder die optische Fläche reversibel zwischen einer passiven Position, in der sich das Endstück (130, 330, 430, 530, 630, 730) nicht der optischen Fläche (162, 362, 462, 562, 662, 762) gegenüberliegend befindet, und einer aktiven Position, in der sich das Endstück gegenüber der zu reinigenden optischen Fläche befindet, zu verschieben.

5. Reinigungsvorrichtung (500) nach Anspruch 3 oder 4, **dadurch gekennzeichnet, dass** sie Mittel zum Einschließen (554) des Laserstrahls beinhaltet, die zwischen dem Endstück (530) und der optischen Fläche angeordnet sind.

6. Reinigungsvorrichtung nach einem der vorhergehenden Ansprüche, **dadurch gekennzeichnet, dass** der mindestens eine optische Sensor mindestens eine Detektionszelle, die so angeordnet ist, dass sie eine elektromagnetische Strahlung, die durch die optische Fläche hindurchgeht, detektiert, und Mittel zum Erhalten der Empfindlichkeit mindestens einer Detektionszelle mit Bezug auf den durch die Emissionsquelle (110, 210, 310A, 310B, 410, 510, 610, 710) emittierten Laserstrahl beinhaltet.

7. Reinigungsvorrichtung nach einem der Ansprüche 3 bis 6, **dadurch gekennzeichnet, dass** sie ein Steuermodul (170, 270, 370, 470, 570, 670, 770) beinhaltet, das mit mindestens einer Emissionsquelle (110, 210, 310A, 310B, 410, 510, 610, 710) eines Laserstrahls und mit den ersten Mitteln zum Verschieben (152, 252A, 252B, 352, 452, 464, 552, 632, 752) der relativen Position des Endstücks verbunden ist.

8. Reinigungsvorrichtung nach dem vorhergehenden Anspruch, **dadurch gekennzeichnet, dass** das Steuermodul (170, 270, 370, 470, 570, 670, 770) dazu konfiguriert ist, sowohl eine Emissionsquelle (110, 210, 310A, 310B, 410, 510, 610, 710) eines Laserstrahls als auch die relative Verschiebung des Endstücks (130, 330, 430, 530, 630, 730) mit Bezug auf die optische Fläche (162, 362, 462, 562, 662, 762) des mindestens einen optischen Sensors zu steuern.

9. Reinigungsvorrichtung nach einem der vorhergehenden Ansprüche, **dadurch gekennzeichnet, dass** die Emissionsquelle (110, 210, 310A, 310B, 410, 510, 610, 710) des Laserstrahls dazu konfiguriert ist, Laserstrahlen mit unterschiedlichen Wellenlängen zu emittieren.

10. Reinigungsvorrichtung (300) nach einem der vorhergehenden Ansprüche, **dadurch gekennzeichnet, dass** sie mehrere Emissionsquellen (310A, 310B) von Laserstrahlen, deren Wellenlängen unterschiedlich sind, beinhaltet, wobei jede Emissionsquelle Mittel zum Führen ihres Laserstrahls auf mindestens einen Teil der optischen Fläche des mindestens einen optischen Sensors beinhaltet.

11. Reinigungsvorrichtung nach dem vorhergehenden Anspruch, **dadurch gekennzeichnet, dass** die Emissionsquelle (110, 210, 310A, 310B, 410, 510, 610, 710) des Laserstrahls und die Führungsmittel dazu konfiguriert sind, die optische Fläche mit einem Laserstrahl zu beleuchten, dessen Fluenz gleich einem oder kleiner als ein Schwellenwert ist.

12. Verfahren zur Reinigung der optischen Fläche eines optischen Sensors für eine elektromagnetische Strahlung mit Hilfe einer Reinigungsvorrichtung (100, 200, 300, 400, 500, 600, 700) nach einem der Ansprüche 3 oder 4 bis 11 in Abhängigkeit von Anspruch 3, das mindestens einen Schritt des Aktivierens der Emissionsquelle (110, 210, 310A, 310B, 410, 510, 610, 710) eines Laserstrahls und die ersten Mittel zum Verschieben (152, 252, 352, 452, 464, 552, 632, 752) der relativen Position des Endstücks implementiert, um die optische Fläche mit einem Laserstrahl zu beleuchten.

13. Reinigungsverfahren nach Anspruch 12, **dadurch gekennzeichnet, dass** während des Schritts des Aktivierens die ersten Verschiebemittel (152, 252, 352, 452, 464, 552, 632, 752) so angesteuert werden, dass sich der Laserstrahl auf der optischen Fläche verschiebt.

14. Reinigungsverfahren nach Anspruch 12 oder 13, **dadurch gekennzeichnet, dass** vor dem Schritt des Aktivierens das Erfassen, durch den mindestens einen optischen Sensor, eines ersten Referenzbilds, gefolgt von dem Erfassen, durch diesen mindestens einen optischen Sensor, eines zweiten Referenzbilds durchgeführt wird und das Berechnen des Kontrastunterschieds zwischen dem ersten und dem zweiten Referenzbild durchgeführt wird, wobei der Schritt des Aktivierens ausgelöst wird, wenn dieser Unterschied einen vorgegebenen Schwellenwert überschreitet.

15. Reinigungsverfahren nach Anspruch 14, **dadurch gekennzeichnet, dass** während des Schritts des Aktivierens der Laserstrahl nur auf dem oder den Bereichen der optischen Fläche verschoben wird, die einem zwischen dem ersten und dem zweiten Bild berechneten Kontrastunterschied entsprechen, der einen vorgegebenen Schwellenwert überschreitet.

## Claims

1. Device (100, 200, 300, 400, 500, 600, 700) for cleaning the optical surface (162, 362, 462, 562, 662, 762) of at least one optical sensor (160, 260, 360, 460, 560, 660, 760) for a motor vehicle, **characterized in that** it includes a source (110, 210, 310A, 310B, 410, 510, 610, 710) for emitting a laser beam and means for guiding said laser beam onto at least a part of the optical surface (162, 362, 462, 562, 662, 762) so as to clean the optical surface.

2. Cleaning device according to the preceding claim, **characterized in that** the guide means include a device (142, 342, 442) for shaping the laser beam emitted by the emission source (110, 210, 310A, 310B, 410, 510, 610, 710) for projection thereof onto at least a part of the optical surface of the at least one optical sensor (160, 260, 360, 460, 560, 660, 760).

3. Cleaning device according to Claim 1 or 2, **characterized in that** it includes an end piece (130, 330, 430, 530, 630, 730) for emitting the laser beam and first means (152, 252, 352, 452, 464, 552, 632, 752) for moving the relative position of the emission end piece with respect to the optical surface of the at least one optical sensor.

4. Cleaning device according to the preceding claim, **characterized in that** the first movement means are configured to move the end piece and/or the optical surface reversibly between a passive position in which the end piece (130, 330, 430, 530, 630, 730) is not facing the optical surface (162, 362, 462, 562, 662, 762) and an active position in which the end piece faces the optical surface to be cleaned.

5. Cleaning device (500) according to Claim 3 or 4, **characterized in that** it includes means (554) for confining the laser beam disposed between the end piece (530) and the optical surface.

6. Cleaning device according to one of the preceding claims, **characterized in that** the at least one optical sensor includes at least one detection cell adapted to detect electromagnetic radiation passing through the optical surface and means for preserving the sensitivity of at least one detection cell vis a vis the laser beam emitted by the emission source (110, 210, 310A, 310B, 410, 510, 610, 710).

7. Cleaning device according to one of Claims 3 to 6, **characterized in that** it includes a control module (170, 270, 370, 470, 570, 670, 770) connected to at least one source (110, 210, 310A, 310B, 410, 510, 610, 710) for emitting a laser beam and to the first means (152, 252A, 252B, 352, 452, 464, 552, 632, 752) for moving the relative position of the end piece.

8. Cleaning device according to the preceding claim, **characterized in that** the control module (170, 270, 370, 470, 570, 670, 770) is configured to control both a source (110, 210, 310A, 310B, 410, 510, 610, 710) for emitting a laser beam and the relative movement of the end piece (130, 330, 430, 530, 630, 730) with respect to the optical surface (162, 362, 462, 562, 662, 762) of the at least one optical sensor.

9. Cleaning device according to one of the preceding claims, **characterized in that** the source (110, 210, 310A, 310B, 410, 510, 610, 710) for emitting the laser beam is configured to emit laser beams with different wavelengths.

10. Cleaning device (300) according to one of the preceding claims, **characterized in that** it includes a plurality of laser beam emission sources (310A, 310B) the wavelengths of which are different, each emission source including means for guiding its laser beam onto at least a part of the optical surface of the at least one optical sensor.

11. Cleaning device according to the preceding claim, **characterized in that** the source (110, 210, 310A, 310B, 410, 510, 610, 710) for emitting the laser beam and the guide means are configured to illuminate the optical surface with a laser beam the fluence of which is equal to or less than a threshold value.

12. Method of cleaning the optical surface of an optical sensor of electromagnetic radiation using a cleaning device (100, 200, 300, 400, 500, 600, 700) according to one of Claims 3 or 4 to 11 when dependent on Claim 3, employing at least one step of activating the source (110, 210, 310A, 310B, 410, 510, 610, 710) for emitting a laser beam and the first means (152, 252, 352, 452, 464, 552, 632, 752) for moving the relative position of the end piece so as to illuminate the optical surface with a laser beam.

13. Cleaning method according to Claim 12, **characterized in that** during the activation step the first movement means (152, 252, 352, 452, 464, 552, 632, 752) are controlled so as to move the laser beam over the optical surface.

14. Cleaning method according to Claim 12 or 13, **characterized in that** prior to the activation step at least one optical sensor acquires a first reference image followed by the acquisition by said at least one optical sensor of a second reference image and the contrast difference between the first and second reference images is calculated, the activation step being triggered if said difference exceeds a predetermined threshold value.

15. Cleaning method according to Claim 14, **characterized in that** during the activation step the laser beam is moved only over the zone or zones of the optical surface corresponding to a calculated contrast difference between the first and second images that exceeds a predetermined threshold value.
